(19) Europäisches Patentamt
European Patent Office
Office européen des brevets

(11) **EP 3 471 338 A1**

(12) **EUROPEAN PATENT APPLICATION**

(43) Date of publication:
**17.04.2019 Bulletin 2019/16**

(51) Int Cl.:
**H04L 12/18** (2006.01)  **H04L 12/58** (2006.01)
**H04W 84/18** (2009.01)  **H04W 40/24** (2009.01)

(21) Application number: **17306398.3**

(22) Date of filing: **16.10.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **InterDigital CE Patent Holdings**
**75017 Paris (FR)**

(72) Inventors:
• **PARTHASARATHY, Shanmugasarathy**
**10318 Berlin (DE)**
• **MS, Zameerun**
**620008 Tiruchirappalli (IN)**

(74) Representative: **Amor, Rim et al**
**InterDigital CE Patent Holdings**
**20, rue Rouget de Lisle**
**92130 Issy-les-Moulineaux (FR)**

(54) **LIMITING BROADCAST COMMUNICATIONS CASCADING**

(57) A method and apparatus are described including receiving a message via a wireless network, if the message has been previously received by a current receiver, then extracting parameters for limiting message cascading from a header of the message, processing the message, if the parameters for limiting the message cascading are within certain values for the parameters, adding an identifier of a current receiver to the header of the message, scanning an area to identify devices capable of communicating via the wireless network within the area, the area defined by at least one parameter in the header of the message, the identified devices being devices to which the message is to be transmitted, extracting unique identifiers of previous receivers from the message header, if any of the identifiers of the previous receivers are the same as any of the identifiers of any of the identified devices, removing the identified devices having the same identifiers from potential destination receivers of the message and transmitting the message to at least one of the identified devices having identifiers that differ from the identifier of any of the previous receivers.

Fig. 7

## Description

FIELD

The proposed method and apparatus relates to limiting the cascading of broadcast messages. The broadcast messages are transmitted over a wireless network, such as a mesh network or a short range broadcast communications network.

BACKGROUND

In multicast and broadcast applications, data are transmitted from a server to multiple receivers over wired and/or wireless networks. A multicast system as used herein is a system in which a server transmits the same data to multiple receivers simultaneously, where the receivers form a subset of all the receivers up to and including all of the receivers. A broadcast system is a system in which a server transmits the same data to all of the receivers simultaneously. That is, a multicast system by definition can include a broadcast system.

This section is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

Mesh networks are gaining in popularity in terms of the Internet of Things (IoT) and in other emerging technologies. Mesh networks include short range broadcast communication technologies.

The proposed method and apparatus is directed to communication between IoT enabled devices or between IoT enabled devices and a gateway device. The proposed method and apparatus is directed to communication between IoT enabled devices using short range broadcast communication techniques such as Bluetooth, Zigbee, RF4CE, WiFi, Wimax, Digimesh, Zwave, Lora, Thread, NarrowBand-Internet of Things (NB-IOT) or 6LoWPAN and the like to communicate among themselves. ZigBee is an IEEE 802.15.4-based specification for a suite of high-level communication protocols used to create personal area networks with small, low-power digital radios. 6LoWPAN is an acronym for *IPv6 over Low power Wireless Personal Area Network.* RF4CE is a ZigBee application profile. Thread is an Internet of Things (IoT) home automation protocol. NarrowBand IoT is a Low Power Wide Area Network (LPWAN) radio technology standard that has been developed to enable a wide range of devices and services to be connected using cellular telecommunications bands. Wi-Fi or WiFi is a technology for wireless local area networking among devices based on IEEE 802.11 suite of standards. WiMAX (Worldwide Interoperability for Microwave Access) is a family of wireless communication standards based on the IEEE 802.16 set of standards, which provide multiple physical layer (PHY) and Media Access Control (MAC) options. DigiMesh is a proprietary peer-to-peer wireless networking topology developed by Digi International. The protocol allows for time synchronized sleeping nodes/routers and low-power battery powered operation. The protocol is currently supported by several 900 MHz and 2.4 GHz radio modules from Digi International.

Zigbee and Zwave are familiar protocols designed for mesh networks. Bluetooth protocol has also adapted to include mesh networking in its specification. Bluetooth is a n important and popular wireless protocol. Bluetooth protocol is inexpensive and readily available by customizing existing software, the potential of mesh networking among IoT enabled devices can be leveraged in existing mesh network devices or short range broadcast communication devices.

In a mesh or mesh-like network, a message from node A to node C can be delivered even if the two nodes (devices) are not within range of each other, providing that a third node (device) B can communicate with both nodes A and C. Mesh and/or mesh-like topologies will play an increasingly important role in the communications revolution and evolution.

One benefit of mesh or mesh-like topologies is that the device need not have an Internet connection. All broadcast communication devices need is support of and for broadcast communications and sufficient power (battery or electric) to communicate with each other. Almost free communications are thereby achieved.

SUMMARY

The proposed method and apparatus addresses the problem of unlimited cascading (broadcasting) of messages in a mesh or mesh-like network. In a vast distributed network environment, broadcast messages and other data may be cascaded endlessly and the networks flooded with these endless messages and data. In many scenarios such messages need not be endlessly cascaded but are only applicable with a limited range. Multiple methods may be used to limit cascading of such messages. Such methods are also applicable to IEEE 802.11 mesh network messages and data.

As such four methods for limiting cascading are described herein. The first is to limit the maximum number of devices is any possible transmission path. That is, there is a maximum number of devices in any single path between the transmitter and any receiver. A receiver can include any receiving device such as but not limited to nodes, computers, laptops, personal digital assistants (PDAs), dual mode smart phones, iPads, iPods, tablets etc. Another method is to limit propagation of messages and/or data by time. That is, messages usually include a time stamp. If a message or data is received beyond a prescribed time limit then the message or data is discarded. Another method to limit cascading of broadcast messages or data is to set boundaries. The boundaries may be set using global positioning system (GPS) coordinates, such as latitude and longitude. The GPS coordinate may define any number of geometric shapes, such as circles, squares, rectangles, triangles or any other multi-sided polygons. Information in the header of the message or data defines the type of shape, such as delineated above and the GPS coordinates of points of the shape. When a message or data is received, the receiver compares its GPS location to the boundary defined by the shape of the GPS coordinates in the message or data and if the receiving device is beyond the boundaries set by the shape defined by the GPS coordinates then the message or data is dropped and discarded. Another method is to use pin codes.

An originator (initiator), such as a gateway or mobile device etc. may have additional capabilities, such as Internet access to the external world (beyond the short range broadcast network). It is, however, unnecessary that the message or data originate in one of such devices.

In a first aspect, a method is described including receiving a message via a wireless network, if the message has not been previously received by a current receiver, then extracting parameters for limiting message cascading from a header of the message, processing the message, if the parameters for limiting the message cascading are within threshold (certain) values for the parameters, adding an identifier of the current receiver to the header of the message, scanning an area to identify devices capable of communicating via the wireless network within the area, the area defined by at least one parameter in the header of the message, the identified devices being devices to which the message is to be transmitted, extracting identifiers of previous receivers from the message header, if any of the identifiers of the previous receivers are the same as any of the identifiers of any of the identified devices, removing the identified devices having the same identifiers from potential destination receivers of the message and transmitting the message to at least one of the identified devices having identifiers that differ from the identifier of any of the previous receivers.

In an embodiment, the message has not been previously received by the current receiver if an identifier of the message differs from an identifier of any previously received message, the identifier of the previously received message having been stored in the current receiver.

In an embodiment, if the message has been previously received by the current receiver then the message is dropped and not transmitted further.

In an embodiment, the wireless network is one of a mesh network and a short range broadcast communications network and the previous receivers and the identified devices are nodes in the wireless network.

In another aspect, a method is described including constructing a message, calculating an identifier for the message, inserting the identifier into a header of the message, determining at least one parameter to be used to limit message propagation, inserting the at least one limiting parameter into the header of the message and broadcasting the message.

In an embodiment, the at least one parameter is one of an identifier of the current receiver or at least one of the previous receivers, a timeout, a maximum device count and a plurality of parameters defining a geometric shape and the parameters defining the geometric shape are global positioning system (GPS) boundary points.

In an embodiment, the identifier of the message is a hash of data of the message, a date the message was initially transmitted and a time the message was initially transmitted.

In another aspect, an apparatus is described including means for receiving a message via a wireless network, means for extracting parameters for limiting message cascading from a header of the message, if the message has been previously received by a current receiver, means for processing the message, if the parameters for limiting the message cascading are within threshold (certain) values for the parameters, means for adding an identifier of the current receiver to the header of the message, means for scanning an area to identify devices capable of communicating via the wireless network within the area, the area defined by at least one parameter in the header of the message, the identified devices being devices to which the message is to be transmitted, means for extracting identifiers of previous receivers from the message header, means for removing the identified devices having the same identifiers of the previous receivers from being potential destination receivers of the message, if the identifiers of any of the previous receivers are the same as the identifiers of any the identified devices and means for transmitting the message to at least one of the identified devices having identifiers that differ from the identifiers of the previous receivers.

In an embodiment, the message has been previously received by the current receiver if an identifier of the message differs from an identifier of any previously received message, the identifier of the previously received message having been stored in the current receiver.

In an embodiment, if the message has been previously received then the message is dropped and not transmitted further.

In an embodiment, the wireless network is one of a mesh network and a short range broadcast communications network and the current receiver and the identified devices are nodes in the wireless network.

In another aspect, an apparatus is described including constructing a message, calculating an identifier for the message, inserting the identifier into a header of the message, determining at least one parameter to be used to limit message propagation, inserting the at least one limiting parameter into the header of the message and broadcasting the message.

In an embodiment, the at least one parameter is one of an identifier of the current receiver or at least one of the previous receivers, a timeout, a maximum device count and a plurality of parameters defining a geometric shape and the parameters defining the geometric shape are global positioning system (GPS) boundary points.

In an embodiment, the identifier of the message is a hash of data of the message, a date the message was initially transmitted and a time the message was initially transmitted.

Since elements of embodiments can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

BRIEF DESCRIPTION OF THE DRAWINGS

The proposed method and apparatus is best understood from the following detailed description when read in conjunction with the accompanying drawings. The drawings include the following figures briefly described below:

Fig. 1 shows an example of limiting cascading (broadcasting, propagating, transmitting, sending) a message or data using a maximum device count.
Fig. 2 shows a square geometric shape using GPS boundary points to define the shape in accordance with the principles of the proposed method.
Fig. 3 shows a partial arc or pie slice shaped geometric shape in accordance with the principles of the proposed method.
Fig. 4 shows a circular geometric shape in accordance with the principles of the proposed method.
Fig. 5 shows a multi-point shape having a plurality of GPS boundary points in accordance with the principles of the proposed method.
Fig. 6 shows a targeted area and a tunnel to get to the targeted area.
Fig. 7 is a flowchart of an exemplary embodiment of the proposed method from the perspective of a receiver.
Fig. 8 is a flowchart of an enlarged portion of the exemplary embodiment of Fig. 7.
Fig. 9 is a flowchart of an enlarged portion of the exemplary embodiment of Fig. 7.
Fig. 10 is a flowchart of an enlarged portion of the exemplary embodiment of Fig. 7.
Fig. 11 is a flowchart of an enlarged portion of the exemplary embodiment of Fig. 7.
Fig. 12 is a flowchart of an exemplary embodiment of the proposed method from the perspective of an originator (initiator) of a message.
Fig. 13 is a block diagram of an exemplary embodiment of an IoT enabled device.

It should be understood that the drawing(s) are for purposes of illustrating the concepts of the disclosure and is not necessarily the only possible configuration for illustrating the disclosure.

DETAILED DESCRIPTION

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

Messages and/or data that is broadcast and cascaded using mesh communications or short range broadcast communications are uniquely identified. This may be accomplished in a number of ways. Duplicate received messages are dropped (discarded) by the receiving devices in order to regulate network traffic.

The first method described briefly above limits the maximum number of devices in any possible transmission path between the originator of the message and any receiver. In this method, the originator determines the maximum number of devices per path for the message or data based on a number of factors. The originator (initiator) updates a maximum device count in the message header. A device count may also be used, with the device count initialized to zero. Each device that the message reaches increments the device count and compares it to the maximum device count. If the two are equal then the message or data is not further cascaded or broadcast. If the device count is not equal to the maximum device count then the message or data is forwarded (propagated, transmitted, broadcast, sent) to the next level (layer) of devices within the range of the mesh or short range broadcast communications. In the alternative, the maximum device count is used alone and each device that the message or data reaches decrements the maximum device count and a test is performed to determine if the maximum device count has reached a threshold (certain) value (e.g., zero). If the maximum device count has reached the threshold (certain) value (e.g., zero) then the message or data is not cascaded or broadcast further. If the maximum device count is not equal zero then the message or data is forwarded (propagated, transmitted, broadcast, sent) to the next level (layer) of devices within the range of the mesh or short range broadcast communications.

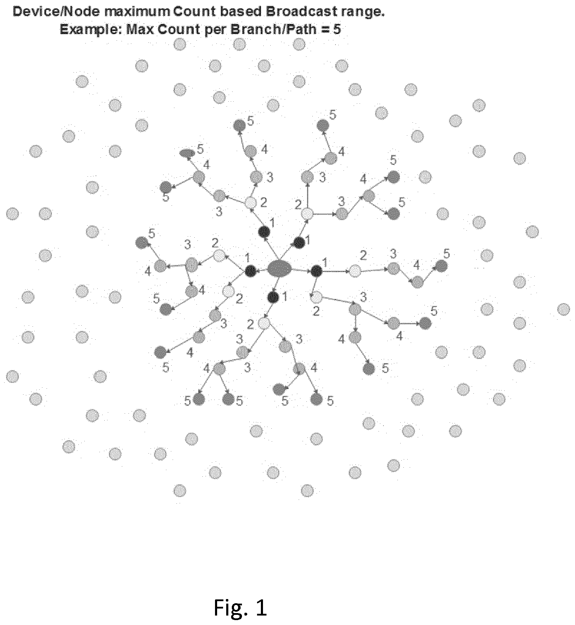

Fig. 1 shows an example of limiting cascading (broadcasting, propagating, transmitting, sending) a message or data using a maximum device count. In Fig. 1 the maximum device count is set to 5 devices per path (branch).

Limiting the maximum device count implicitly limits the geographic range that the message or data will be propagated (forwarded, sent, broadcast, transmitted). A typical average distance between devices could be a few meters. This distance multiplied with the maximum device count will be the possible distance that the message will be broadcast (propagated, forwarded, sent, transmitted). Typical distances between the devices will differ based on the nature of the environment (commercial, residential, rural, public places etc.). For example, in a commercial office building, devices will be very close to each other and in a residential area the practical distance between devices will be farther apart. Apartments are densely populated areas Devices are more closely spaced that in a residential area of individual homes but space farther apart that a commercial environment. The environment or locality type will be one of the factors considered when calculating the maximum number of devices to which the message or data will be propagated per path.

For example, to transmit a message to 100 meters in a commercial environment with an average distance between devices in a commercial building of 1 meter, the maximum number of devices would be determined to be 100 devices from the originator (initiator) of the message. That is, considering a circle surrounding the originator (initiator) of the message, the radius would be 100 meters and the diameter would be 200 meters. The maximum device count would be set to 100 devices.

The originator (initiator) of the message needs to know the required coverage and the environment (locality type). Knowing the environment will provide the average distance between devices in the environment. Let refD be a standard reference distance; let L be a location factor; let N be the maximum number of devices per path; let avgD be the average distance between devices in the environment based on the nature of the environment; and let d be the required coverage. Then

$$avgD = refD * L$$

$$N = d / avgD$$

That is, the average distance between devices is equal to the reference distance times the location factor. The maximum devices per path is equal to the required coverage divided by the average distance between devices.

In the method to limit the propagation of mesh or short range broadcast communication messages or data by a time limit, when a message transmission is started, the originator determines the propagation end time for the message based on multiple factors. The originator (initiator) sets the propagation end time in the message header. When the message is broadcast (propagated, sent, forwarded, transmitted) to devices within the range using mesh or short range broadcast communications, a receiver compares the propagation end time in the message header with the current time. If current time is not past (has not exceeded) the propagation end time then the receiver transmits (broadcasts, forwards, sends, propagates) the message to the next level of devices within the range of mesh or short range broadcast communications. If the current time has reached (exceeded) the propagation end time included in the message header in the message then the message will not be propagated (broadcast, transmitted, sent, forwarded) further. This method is similar to limiting the propagation (cascading, broadcast) of messages by a maximum number of devices in that the propagation will limit the propagation distance. There will, of course, be typical message transmission, reception and processing time involved for every device for every reception, which will be a factor that implicitly affects the number of devices to which the message can be propagated (broadcast, cascaded, transmitted, forwarded, sent) within the determined propagation end time.

Based on the protocol complexity and other factors, message reception time will vary for a device. Processing and re-transmission time will also vary. Assume for Bluetooth, message transmission, reception and processing for a device may take 100 micro seconds. This value may vary for other protocols depending on the protocol stack and other factors involved. The average practical transmission, reception and processing time can be derived for different protocols and can be used as a factor in determining the propagation end time.

As a further example, consider that the average transmission, reception and processing time for a protocol X for a device is 50 micro seconds. Limiting the propagation end time to 5 minutes will limit the number of devices and distance the message will be propagated. This method works in an approximate way. This method also helps to avoid propagation of expired messages and defines a validity time for a message.

In the geographical propagation limitation method, the GPS parameter denote (define) the bounds of any broadcast (transmission, forwarding). In the geographical propagation limiting method, when a message transmission starts, the originator (initiator) locates the GPS boundaries applicable for the message based on multiple factors. The originator (initiator) sets the GPS boundaries in the message and transmits (broadcasts, propagate) the message to devices within range using mesh or short range broadcast communications. Upon reception of the message, the receiver compares its GPS position with the GPS boundaries included in the header of the message. If the GPS position of the receiver is within the GPS shape prescribed by the GPS boundary points in the header, then the receiver transmits (propagates, broadcasts, sends, forwards) the message to the next level of devices within range of the mesh or short range broadcast communications. If the GPS position of the receiver is outside the GPS shape prescribed by the GPS boundary points in the header of the message then the message will not be propagated (broadcast, transmitted, sent, forwarded, cascaded) further but rather the message will be dropped (discarded). The geographical propagation limitation method, thus, explicitly limits the propagation (broadcast, cascading) distance.

For example, an originator (initiator) initiates a mesh or short range broadcast communication of an emergency message such as a severe weather alert or volcanic eruption and wishes to alert people in a one mile radius. The originator (initiator) derives the GPS boundary point(s) for the one mile radius and sets the derived GPS boundary point(s) in the header of the message. The geometric shape defined by the boundary point(s) is compared with the GPS location of every receiver that receives the broadcast emergency message in order to determine if the emergency message should be cascaded (broadcast, propagated) further or dropped (discarded).

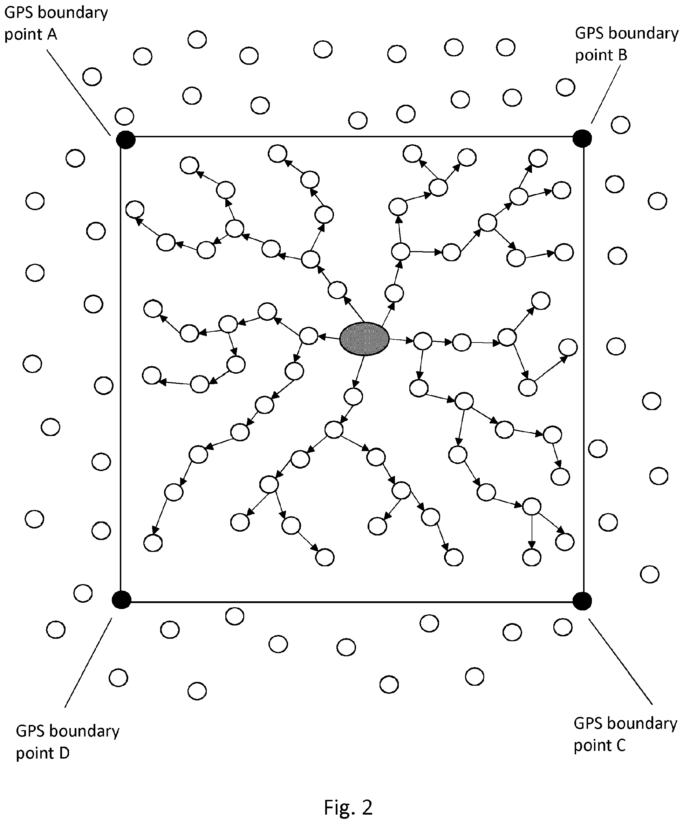

Fig. 2 shows a square geometric shape using GPS boundary points to define the shape in accordance with the principles of the proposed method. A square shape has four boundary points that define the geometric shape. A rectangular shape would similarly have four boundary points. The header would include the name of the geometric shape, such as circle, square, rectangle, pie slice etc. The four GPS boundary points are identified by black shaded circles at the four corners of the square - GPS boundary point A, GPS boundary point B, GPA boundary point C, and GPS boundary point D.

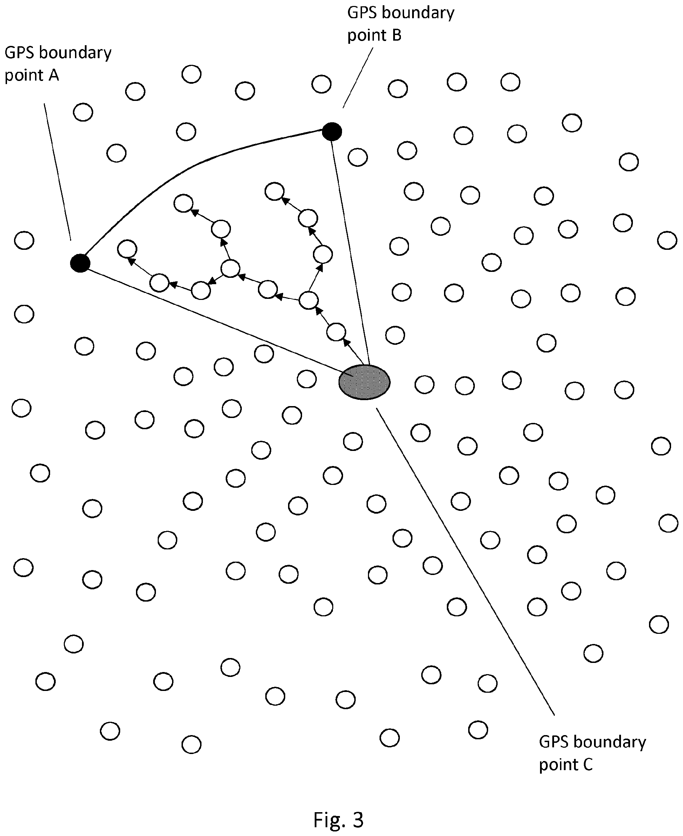

Fig. 3 shows a partial arc or pie slice shaped geometric shape in accordance with the principles of the proposed method. The partial arc or pie sliced shape has three boundary points. Any receiver receiving a message where the receiver has a GPS location within the partial arc (pie shaped geometric shape) then the receiver propagates (broadcasts, cascades) the message to receivers within the range of mesh or short range broadcast communications.

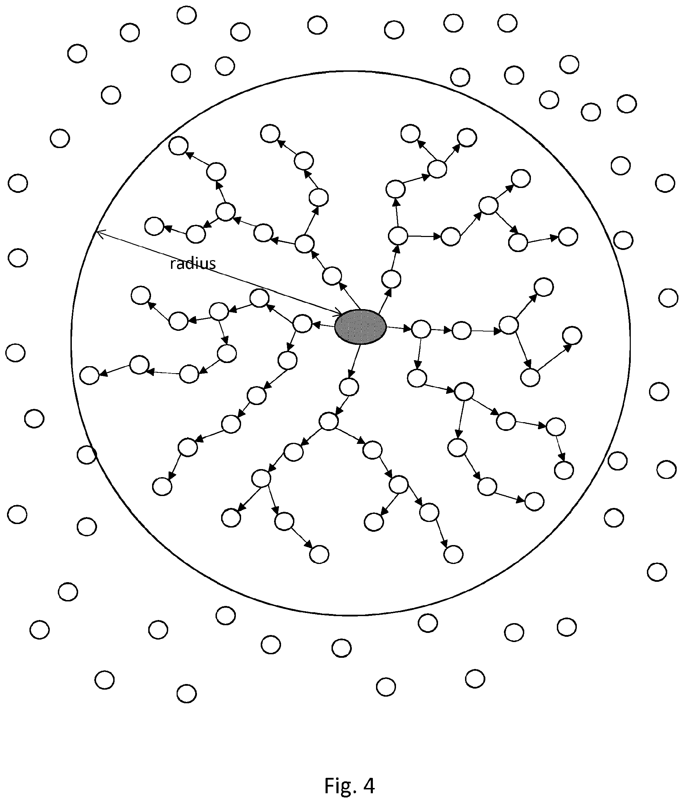

Fig. 4 shows a circular geometric shape in accordance with the principles of the proposed method. In the case of a circular geometric shape, the shape is identified as a circle in the header and the radius is supplied in the header as well.

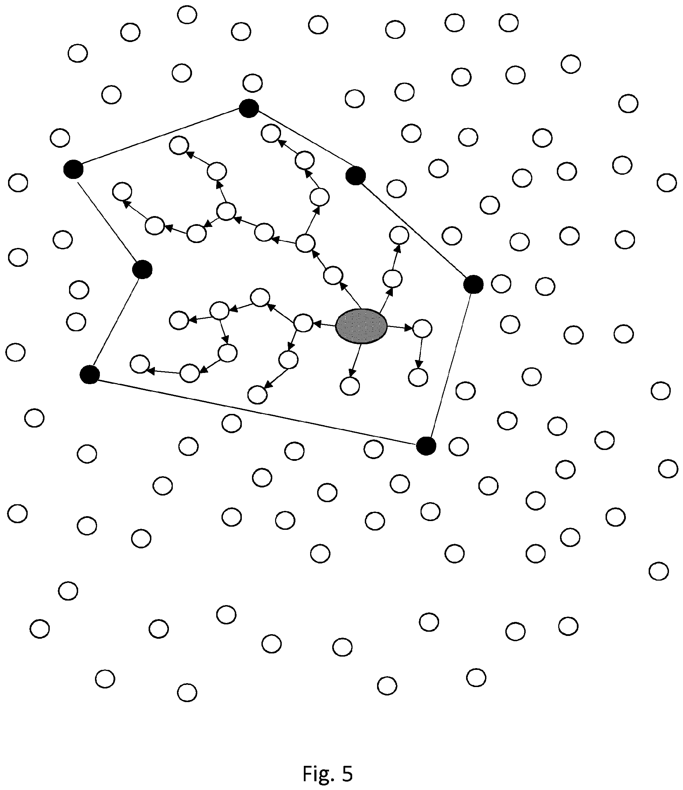

Fig. 5 shows a multi-point shape having a plurality of GPS boundary points in accordance with the principles of the proposed method. In the case of the multi-point geometric shape there are seven GPS boundary points. The message header would indicate that the geometric shape was a multi-point shape and also include the seven GPS boundary points.

In another embodiment, it is possible to specify multiple GPS regions in the same message. If the message initiator (originator) is away from the target region then the message needs a channel to reach the targeted region. For example, a farmer has 50 acres of farm land. The farmer wants to control a specific area of farm land which is far away from his house. For example, the farmer wants to control the smart sprinklers in that portion of farm land. In this scenario, the proposed method and apparatus uses the GPS geometric propagation limitation to define the shape and GPS boundaries for the targeted portion of the farm. For example, the farmer wants to water a circular area of his land but since it is far away, the farmer also needs to define a path for the mesh or short range broadcast communications message to water the land to reach the smart sprinklers in the targeted area. The message needs to include definitions for the targeted area and the path to the targeted area in order propagate (broadcast, cascade) the message and deliver the message to control the sprinklers in the targeted area. Thus, two GPS regions are defined in the message. One region is the targeted region (area) and another region is a Tunnel/Channel region (area). Receivers (nodes, devices) in the tunnel region just propagate the message but do not consume (process, use) the message. Receivers in the targeted region (area) process (consume, use) and propagate the message to any other receivers in the targeted region (area).

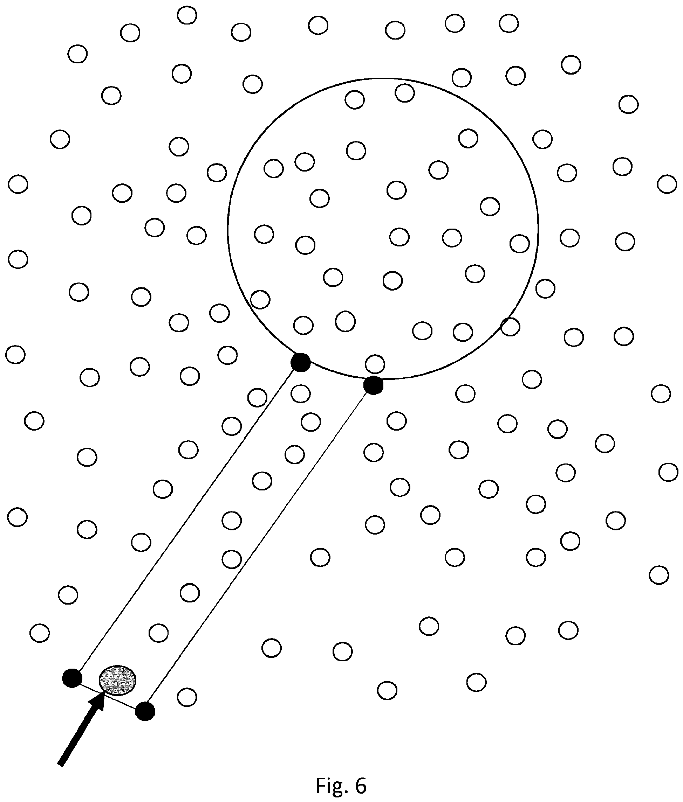

Fig. 6 shows a targeted area and a tunnel to get to the targeted area. In Fig. 6 the targeted area is defined by the circle, which is specified in the message header by the geometric shape identified as a circle and by a GPS point indicating the center of the circle and a radius. The tunnel is identified as a rectangle and defined by four GPS boundary points similar to the square shown in Fig. 2. The originator (initiator) of the message defines the geometric shapes and the boundaries of the geometric shapes used to get the message to receivers in the targeted area through the tunnel. The receivers in the targeted area process, use and propagate the message to other receivers within the circular targeted area. Receivers in the tunnel propagate (broadcast, cascade, transmit, send, forward) the message to other receivers in the tunnel but the receivers in the tunnel do not process (use, consume) the message. Receivers not within the tunnel or the targeted area drop (discard) the message.

The above scenario can be extended to incorporate multiple tunnels and multiple targeted regions (areas). For example, if the farmer also wants to control a second region, which is distant from the first region. Tunnel 1 -> Target region 1 -> Tunnel 2 -> Target region 2

In the pin code propagation limitation method one or more destination pin code(s) is (are) set in the header of a message. The destination pin codes are the pin codes of the receivers to which the message is targeted. The one or more pin codes in the message header should be adjacent to each other. In the pin code propagation limitation method, when the originator initiates transmission of a message, the originator determines the pin codes from a list of applicable pin codes for the message based on multiple factors. The originator (initiator) sets the pin codes in the header of the message and transmits (broadcasts, propagates, cascades, sends, forwards) the message to devices within a range of the mesh or short range broadcast communications. Upon reception of the message, the receiver compares the receiver's pin code with the pin codes in the message header. If the receiver's pin code matches any of the one or more pin codes in the message then the receiver transmits (propagates, forwards, cascades, sends, broadcasts) the message to the next level of devices within range of the mesh or short range broadcast communications. If the receiver's pin code does not match any of the one or more pin codes in the message header then the message will not be propagated (transmitted, broadcast, sent, forwarded, cascaded) further but rather the message will be dropped (discarded).

Among the advantages of the pin code propagation limitation method are that is is easy to implement if the originator (initiator) know its own pin code and it can be directly applied to use cases which need pin code based transmission.

Messages are identified by an identifier (identification) (ID). In many cases a sequence number is used to uniquely identify a message. The proposed method and apparatus uses an ID derived by the originator (initiator) based on a hash of the message data, the date and the time. This ID will be inserted into the message header, which is not part of the hash of the message. When the message is received by any receiver, the hash will be cached by the receiver to determine if the message is a duplicate of any previously received messages. Duplicate messages are not propagated but rather are dropped (discarded).

To avoid duplicate message being transmitted (broadcast, propagated, cascaded, forwarded, sent) to a device in a path multiple times, every receiver in the path inserts its identifier, such as a media access control (MAC) address identification (ID) or a node identifier into the header of the message and transmits (forwards, sends, broadcasts, propagate, broadcasts) the message. The term "identifier" will be used herein to include both any node (receiver) identifier or MAC address or IP address or any other means to uniquely identify the device or apparatus involved in cascading broadcast communications in a mesh or short range broadcast (or multicast) communications network.

Message headers will contain a list of MAC addresses or node identifiers of receivers that have already processed the message. Before transmission to next receiver, the MAC address or node identifier of the next receiver is compared with the MAC addresses or node identifiers in the list present in the header of the message. If the MAC address or node identifier is already present in the list of MAC addresses or node identifiers in the message header, then the message will not be transmitted (propagated, broadcast, cascaded, forwarded, sent) to that receiver. Thus, a receiver's burden of checking for duplicate messages is avoided.

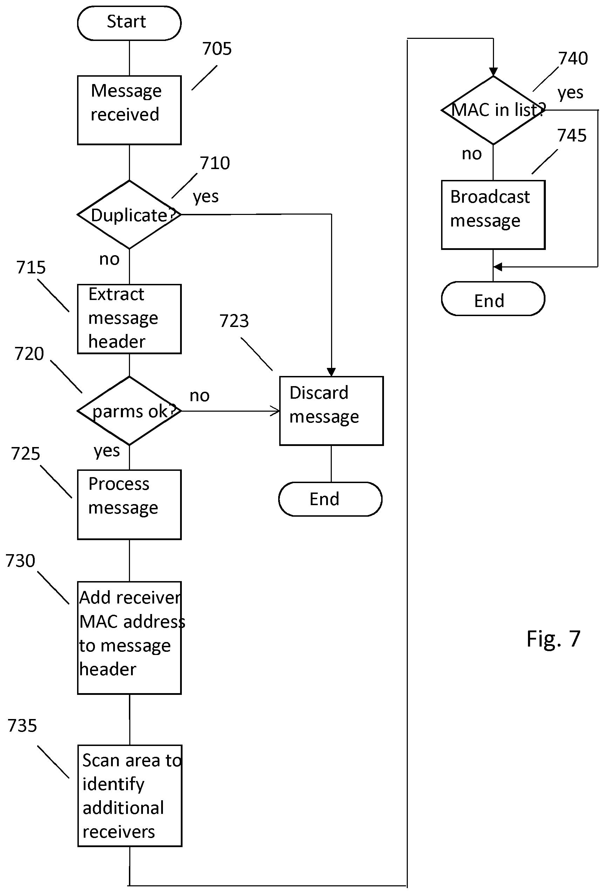

Fig. 7 is a flowchart of an exemplary embodiment of the proposed method from the perspective of a receiver. At 705 a message is received. At 710 a test is performed to determine if the message is a duplicate message. A duplicate message is a message that the receiver has received previously. Whether it is determined to be a duplicate message or not is based on if an identifier (ID) in the message header matches an ID of a message stored in the receiver of a previously received message. The ID may be a sequence number. In the proposed method and apparatus, an ID is a hash of the message, the date that the message was created and the time that the message was created. The header of the message is not included in the hash of the message. If the message is a duplicate then at 723 the message is dropped (discarded). If the message is not a duplicate message then at 715 the header of the message is extracted. The header includes the ID and parameters for limiting the propagation (cascading) of the message such as, but not limited to, a time out, a maximum device count, a pin code, and a geometric shape and GPS boundary points (or radius if the geometric shape is a circle). At 720 a test is performed to determine if the parameters are ok (within acceptable limits for the type of limitation). Acceptable limits for the parameters vary depending on the type of limitation but in all cases threshold (certain) values are available at the receiver for comparison with the parameter values. For example, if the parameters to limit propagation (cascading) messages, is a geometric shape and the geometric shape is a square or a rectangle then there need to be four GPS boundary points. If there are not four GPS boundary points then the parameters are not ok. If the geometric shape is a square or a rectangle and there are four GPS boundary points but they cannot be connected to make a square or a rectangle then the parameters are not ok. If the parameters are not ok then processing proceeds to 723.

If the parameters are ok then at 725 the message is processed (consumed, used). The processing depends on the message. For example, a message to control smart sprinklers in a targeted area of a farm is processed differently than a message advising the user of the receiver of an emergency condition, such as severe weather, a volcano, an amber alert etc. At 730 the receiver's MAC address or node (receiver) identifier is added to the header of the message. At 735 the area is scanned to identify additional receivers. The scanned area is limited to the area supported by the wireless network. For example, if the wireless network is a short range broadcast communications network then the scanned area is limited to the area supported by such short range broadcast communications network. At 740 the receiver performs a test to determine if the MAC addresses or node (receiver) identifiers of any of the receivers identified in the scan are already among the MAC addresses or node identifiers (of previous receivers) in the header, which means that a receiver (node) identified in the scan has already received the message. In that event, the receiver (node) has previously received the message so that receiver (node) is deleted from the list of potential additional (destination) receivers (nodes) identified in the scan. At 745 the message is broadcast (propagated, forwarded, transmitted, sent, cascaded) to the identified in the scan (less the receivers (nodes) that previously received the message).

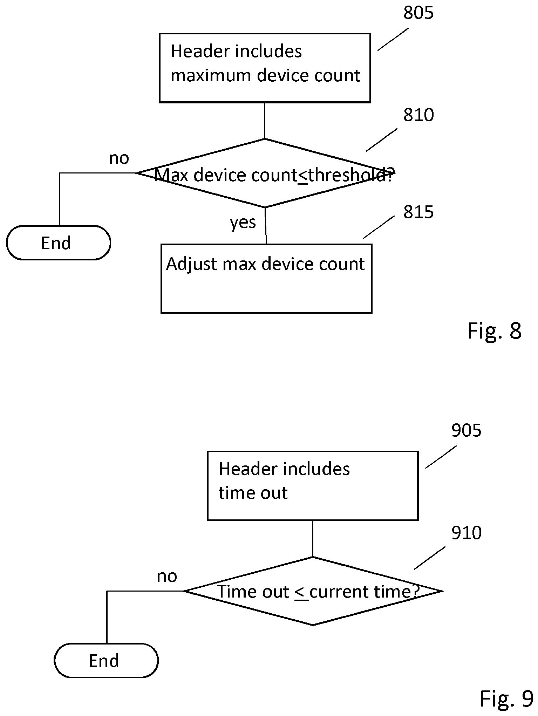

Fig. 8 is a flowchart of an enlarged portion of the exemplary embodiment of Fig. 7. The portion of Fig. 7 depicted in Fig. 8 includes 715 and 720. That is, the parameters extracted from the message header in 715 include the parameters for limiting the cascading (propagation, broadcast) of messages. Fig. 8 is directed to the situation where limiting the propagation (cascading, broadcast) is based on a maximum device count. As described above the propagation limitation based on maximum device count may use a device count as an up-counter (counter that is incremented) and a maximum device count as a threshold (certain) value or the limitation may be implemented as a maximum device count which is decremented and compared to a threshold (certain) value (e.g., zero). Fig. 8 depicts the situation where the maximum device count is decremented. The situation where a device count (up-counter) and a maximum device count are used is not shown but as indicated is another option and is described below (without a corresponding flowchart). Thus, at 805, the maximum device count is extracted from the message header. At 810 the maximum device count is compared to a value, such as a threshold (certain) value (e.g., zero), and if the maximum device count is less than or equal to the threshold (certain) value then the message is dropped (discarded) and processing ends. At 815 the maximum device count is adjusted. In this case of the maximum device count is decremented. After 815 processing return to Fig. 7 and the message is processed accordingly. A device count may also be used, with the device count initialized to zero. Each device that the message reaches increments the device count and compares it to the maximum device count. If the two are equal then the message or data is not further cascaded or broadcast. If the device count is not equal to the maximum device count then the message or data is forwarded (propagated, transmitted, broadcast, sent) to the next level (layer) of devices within the range of the mesh or short range broadcast communications.

Fig. 9 is a flowchart of an enlarged portion of the exemplary embodiment of Fig. 7. The portion of Fig. 7 depicted in Fig. 9 includes 715 and 720. That is, the parameters extracted from the message header in 715 include the parameters for limiting the cascading (propagation, broadcast) of messages. Fig. 9 is directed to the situation where limiting the propagation (cascading, broadcast) is based on a time out. Thus, at 905 the time out is extracted from the message header. At 910 a test is performed to determine if the time out is less than or equal to the current time. If the time out is less than the current time then the message is dropped (discarded) and processing ends. If the time out is greater than the current time then processing returns to Fig. 7 and the message is processed accordingly.

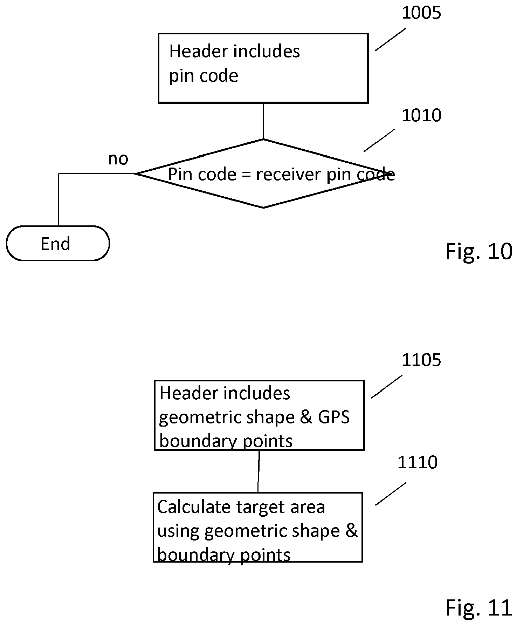

Fig. 10 is a flowchart of an enlarged portion of the exemplary embodiment of Fig. 7. The portion of Fig. 7 depicted in Fig. 10 includes 715 and 720. That is, the parameters extracted from the message header in 715 include the parameters for limiting the cascading (propagation, broadcast) of messages. Fig. 10 is directed to the situation where limiting the propagation (cascading, broadcast) is based on a pin code. At 1005 the pin code is extracted from the message header. At 1010 a test is performed to determine if the extracted pin code is the same as the pin code of the receiver. If the pin codes match then processing returns to Fig. 7 and the message is processed accordingly. If the pin codes do not match then the message is dropped (discarded) and processing ends.

Fig. 11 is a flowchart of an enlarged portion of the exemplary embodiment of Fig. 7. The portion of Fig. 7 depicted in Fig. 10 includes 715 and 720. That is, the parameters extracted from the message header in 715 include the parameters for limiting the cascading (propagation, broadcast) of messages. Fig. 10 is directed to the situation where limiting the propagation (cascading, broadcast) is based on a geometric shape and GPS boundary points (or a radius if the geometric shape is a circle). At 1105 the geometric shape and GPS boundary points and/or radius are extracted from the message header. At 1110 the target area is calculated using the geometric shape and the GPS boundary points. If the geometric shape is a square or a rectangle then there need to be four GPS boundary points. If there are not four GPS boundary points then the parameters are not ok. If the geometric shape is a square or a rectangle and there are four GPS boundary points but they cannot be connected to make a square or a rectangle then the parameters are not ok. If the parameters are not ok then processing proceeds to 723. If the parameters are ok then processing proceeds to 725.

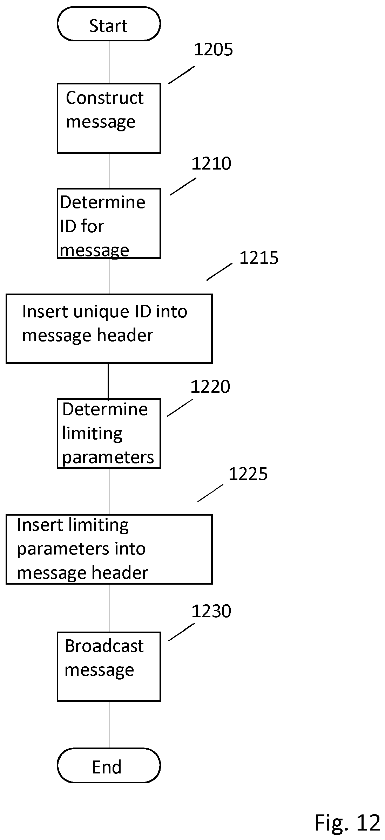

Fig. 12 is a flowchart of an exemplary embodiment of the proposed method from the perspective of an originator (initiator) of a message. At 1205 a new message is constructed (created, generated). At 1210 an identifier (ID) is calculated (determined) for the message. The ID is derived by the originator (initiator) based on a hash of the message data, the date and the time. At 1215 the ID is inserted into the message header, which is not part of the hash of the message. At 1220 the limiting parameters are determined. The limiting parameters can be a time out, a pin code, a maximum device count or a geometric shape and GPS boundary points. At 1225 the limiting parameters are inserted into the message header. At 1230 the message is broadcast (transmitted, propagated, forwarded, sent, cascaded).

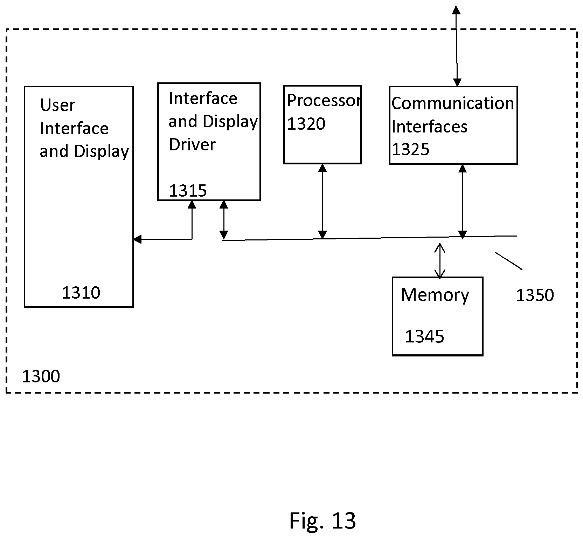

Fig. 13 is a block diagram of an exemplary embodiment of an IoT enabled device for practicing the proposed method. The block diagram configuration includes a bus-oriented 1350 configuration interconnecting a processor (processing unit) 1320, and a memory 1345.

The configuration of Fig. 13 also includes a wireless communication interface 1325. The wireless communications interface 1425 may be used for communication, for example, over a mesh network or over any one of a number of short range communications networks. There may be separate communications interfaces for each such network for all of the different networks may use communications interface 1325. User interface and display 1310 is driven by interface circuit 1315.

The IoT enabled device includes at least one processor 1320 that provides computation functions for the IoT enabled device, such as depicted in Figs. 7 - 12. The processor 1320 can be any form of CPU or controller that utilizes communications between elements of the IoT enabled device to control communication and computation processes. Those of skill in the art recognize that bus 1350 provides a communications path between the various elements of embodiment 1300 and that other point-to-point interconnection options (e.g. non-bus architecture) are also feasible.

Any or all of the functionality included in the network access device may be embodied as application specific integrated circuits (ASICs), field programmable gate arrays (FPGAs), reduced instruction set computers (RISCs) or any other equivalent separate type of co-processor integrated into processor 1320.

Memory 1345 can act as a repository for memory related to any of the methods that incorporate the functionality of the IoT enabled device. Memory 1345 can provide the repository for storage of information such as program memory, downloads, uploads, or scratchpad calculations. Those of skill in the art will recognize that memory 1345 may be incorporated all or in part of processor 1320. Communication interface 1325 has both receiver and transmitter (or transceiver) elements for wireless communications. Program instructions for operation of the processor of the IoT enabled device may be in memory 1345 or may be in processor.

The processing in accordance with the method shown in Figs. 7 - 12 is predominantly performed in the processor 1320 and the communications interface 1325. The processor performs the steps/acts of the method but the reception and transmission between IoT enabled devices is through the communications interface 1325.

It is to be understood that the proposed method and apparatus may be implemented in various forms of hardware, software, firmware, special purpose processors, or a combination thereof. Special purpose processors may include application specific integrated circuits (ASICs), reduced instruction set computers (RISCs) and/or field programmable gate arrays (FPGAs). Preferably, the proposed method and apparatus is implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

It is to be further understood that, because some of the constituent system components and method steps depicted in the accompanying figures are preferably implemented in software, the actual connections between the system components (or the process steps) may differ depending upon the manner in which the proposed method and apparatus is programmed. Given the teachings herein, one of ordinary skill in the related art will be able to contemplate these and similar implementations or configurations of the proposed method and apparatus.

For purposes of this application and the claims, using the exemplary phrase **"at least one** of A, **B and** C,"** the phrase means "only A, or only B, or only C, or any combination of A, B and C."

**Claims**

1. A method, comprising:

   receiving (705) a message via a wireless network;
   if said message has not been previously received by a current receiver (710), then extracting (715) parameters for limiting message cascading from a header of said message;
   processing (725) said message, if said parameters for limiting said message cascading are within certain values for said parameters (720);
   adding (730) an identifier of said current receiver to said header of said message;
   scanning (735) an area to identify devices capable of communicating via said wireless network within said area, said area defined by at least one parameter in said header of said message, said identified devices being devices to which said message is to be transmitted;
   extracting (740) identifiers of previous receivers from said message header;
   if any of said identifiers of said previous receivers are the same as any of said identifiers of any of said identified devices, removing said identified devices having the same identifiers from potential destination receivers of said message; and
   transmitting said message to at least one of said identified devices having identifiers that differ from said identifier of any of said previous receivers.

2. The method according to claim 1, wherein said message has not been previously received by said current receiver if an identifier of said message differs from said identifier of any previously received message, said identifier of said previously received message having been stored in said current receiver.

3. The method according to claim 1, wherein if said message has been previously received by said current receiver then said message is dropped and not transmitted further.

4. The method according to any of said preceding claims, wherein said wireless network is one of a mesh network and a short range broadcast communications network, wherein said current receiver, said previous receivers and said identified devices are nodes in said wireless network.

5. A method, comprising:

   constructing (1205) a message;
   determining (1210) an identifier for said message;
   inserting (1215) said identifier into a header of said message;
   determining (1220) at least one parameter to be used to limit message propagation;
   inserting (1225) said at least one limiting parameter into said header of said message; and
   broadcasting (1230) said message.

6. The method according to any one of said preceding method claims, wherein said at least one parameter is one of an identifier of said current receiver or at least one of said previous receivers, a timeout, a maximum device count and a plurality of parameters defining a geometric shape, wherein said parameters defining said geometric shape are global positioning system (GPS) boundary points.

7. The method according to any one of said preceding claims, wherein said identifier of said message is a hash of data of said message, a date said message was initially transmitted and a time said message was initially transmitted.

8. An apparatus, comprising:

means for receiving a message via a wireless network;
means for extracting parameters for limiting message cascading from a header of said message, if said message has not been previously received by a current receiver;
means for processing said message, if said parameters for limiting said message cascading are within certain values for said parameters;
means for adding an identifier of the current receiver to said header of said message;
means for scanning an area to identify devices capable of communicating via said wireless network within said area, said area defined by at least one parameter in said header of said message, said identified devices being devices to which said message is to be transmitted;
means for extracting identifiers of previous receivers from said message header;
means for removing said identified devices having the same identifiers of said previous receivers from being potential destination receivers of said message, if said identifiers of any of said previous receivers are the same as said identifiers of any said identified devices; and
means for transmitting said message to at least one of said identified devices having identifiers that differ from said identifiers of said previous receivers.

9. The apparatus according to claim 8, wherein said message has not been previously received by said current receiver if an identifier of said message differs from said identifier of any previously received message, said identifier of said previously received message having been stored in said current receiver.

10. The apparatus according to claim 8, wherein if said message has been previously received by said current receiver then said message is dropped and not transmitted further.

11. The apparatus according to any of said preceding apparatus claims, wherein said wireless network is one of a mesh network and a short range broadcast communications network, wherein said current receiver and said identified devices are nodes in said wireless network.

12. An apparatus, comprising:

means for constructing a message;

means for determining an identifier for said message;
means for inserting said identifier into a header of said message;
means for determining at least one parameter to be used to limit message propagation; inserting said at least one limiting parameter into said header of said message; and
means for broadcasting said message.

13. The apparatus according to any one of said preceding apparatus claims, wherein said at least one parameter is one of an identifier of said current receiver or at least one of said previous receivers, a timeout, a maximum device count and a plurality of parameters defining a geometric shape, wherein said parameters defining said geometric shape are global positioning system (GPS) boundary points.

14. The apparatus according to any one of said preceding apparatus claims, wherein said identifier of said message is a hash of data of said message, a date said message was initially transmitted and a time said message was initially transmitted.

15. A computer readable medium comprising instructions which, when executed cause the computer to carry out the method of any of claims 1 to 7.

Device/Node maximum Count based Broadcast range.
Example: Max Count per Branch/Path = 5

Fig. 1

Fig. 2

GPS boundary point A

GPS boundary point B

GPS boundary point C

Fig. 3

Fig. 4

Fig. 5

Fig. 6

Start

705

Message received

710

Duplicate? — yes

no

715

Extract message header

720

parms ok? — no — 723

yes

725

Process message

723

Discard message

End

730

Add receiver MAC address to message header

735

Scan area to identify additional receivers

740

MAC in list? — yes

no

745

Broadcast message

End

Fig. 7

805

Header includes
maximum device count

810

no

Max device count≤threshold?

815

End

yes

Adjust max device count

Fig. 8

905

Header includes
time out

910

no

Time out ≤ current time?

End

Fig. 9

1005

Header includes
pin code

1010

no

Pin code = receiver pin code

End

Fig. 10

1105

Header includes
geometric shape & GPS
boundary points

1110

Calculate target area
using geometric shape &
boundary points

Fig. 11

Start

1205

Construct
message

1210

Determine
ID for
message

1215

Insert unique ID into
message header

1220

Determine
limiting
parameters

1225

Insert limiting
parameters into
message header

1230

Broadcast
message

End

Fig. 12

User
Interface
and Display

1310

Interface
and Display
Driver

1315

Processor
1320

Communication
Interfaces
1325

Memory

1345

1350

1300

Fig. 13

Europäisches
Patentamt

European
Patent Office

Office européen
des brevets

# EUROPEAN SEARCH REPORT

Application Number

EP 17 30 6398

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/250445 A1 (HANSSON MAGNUS [SE]) 10 November 2005 (2005-11-10) * paragraph [0027] - paragraph [0089]; figures 1-4 * | 1-15 | INV. H04L12/18 ADD. H04L12/58 H04W84/18 H04W40/24 |
| A | "LPP Extensions Specification", OMA-TS-LPPE-V2_0-20170419-D, OPEN MOBILE ALLIANCE (OMA), 4330 LA JOLLA VILLAGE DR., SUITE 110 SAN DIEGO, CA 92122 ; USA , no. 2.0 19 April 2017 (2017-04-19), pages 1-444, XP064191101, Retrieved from the Internet: URL:ftp/Public_documents/LOC/Permanent_documents/ [retrieved on 2017-04-19] * page 39, paragraph 5.2.5 Broadcast of Assistance Data - page 55, paragraph 6.2.2.2 Broadcast Message Extension * | 1-15 | |
| A | IEEE, PISCATAWAY, NJ, USA, 3 August 2006 (2006-08-03), XP040430030, * page 108, paragraph 11A.5 Radio Aware OLSR Path Selection Protocol - page 114, paragraph 11A.5.3.5 Considerations on Processing and Forward * | 1-15 | TECHNICAL FIELDS SEARCHED (IPC) H04L H04W |

The present search report has been drawn up for all claims

| Place of search | Date of completion of the search | Examiner |
|---|---|---|
| Munich | 14 March 2018 | Fischer, Erik |

EPO FORM 1503 03.82 (P04C01)

## ANNEX TO THE EUROPEAN SEARCH REPORT
## ON EUROPEAN PATENT APPLICATION NO.

EP 17 30 6398

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2018

| Patent document cited in search report | | Publication date | Patent family member(s) | | Publication date |
|---|---|---|---|---|---|
| US 2005250445 | A1 | 10-11-2005 | AT | 458336 T | 15-03-2010 |
| | | | EP | 1784955 A1 | 16-05-2007 |
| | | | JP | 4607957 B2 | 05-01-2011 |
| | | | JP | 2007536841 A | 13-12-2007 |
| | | | US | 2005250445 A1 | 10-11-2005 |
| | | | WO | 2005109779 A1 | 17-11-2005 |

EPO FORM P0459

For more details about this annex : see Official Journal of the European Patent Office, No. 12/82